# EUROPEAN PATENT SPECIFICATION

(11) **EP 4 548 149 B1**
(45) Date of publication and mention of the grant of the patent: **25.11.2026**
(21) Application number: 23830604.7
(22) Date of filing: 27.06.2023
(51) Int. Cl.: G02B 27/01, G02B 5/00, G02B 27/14, G02B 27/28, G02B 5/30, G02B 27/00

(54) **A NOVEL NEAR EYE DISPLAY OPTICAL SYSTEM**
NEUARTIGES OPTISCHES SYSTEM FÜR AUGENNAHE ANZEIGE
NOUVEAU SYSTÈME OPTIQUE D'AFFICHAGE PROCHE DE L'OEIL

(30) Priority: 28.06.2022 US 202263356051 P; 14.09.2022 US 202263406266 P
(43) Date of publication of application: 07.05.2025
(73) Proprietor: Lumus Ltd., 7403631 Ness Ziona (IL)
(72) Inventor: RONEN, Eitan, 7628026 Rechovot (IL); DANZIGER, Yochay, 2514700 Kfar Vradim (IL); SHULTZ, Uri, 7403631 Ness Ziona (IL)
(74) Representative: Kancelaria Eupatent.pl Sp. z o.o.
(86) International application number: PCT/IB2023/056645
(87) International publication number: WO 2024/003754

(56) References cited:
- WO-A1-2022/080627
- CA-A1- 3 190 651
- GB-A- 2 598 946
- US-A1- 2008 198 471
- US-A1- 2013 107 173
- US-A1- 2019 346 918
- US-A1- 2020 233 217
- US-A1- 2020 310 024
- US-A1- 2020 348 528
- US-A1- 2021 103 340
- US-A1- 2021 271 006
- US-A1- 2021 271 006
- US-A1- 2021 396 978
- US-A1- 2022 099 977

## Description

### FIELD OF THE INVENTION

The present disclosure relates to the field of near eye display optical systems such as head-mounted displays. More specifically, the present disclosure relates to potentially waveguide-less near eye display optical systems.

### BACKGROUND OF THE INVENTION

Consumer demands for improved human-computer interfaces have led to an increased interest in high-quality image head-mounted displays (HMDs) or near-eye displays, commonly known as smart glasses. These devices can provide virtual reality (VR) or augmented reality (AR) experiences, enhancing the way users interact with digital content and their surrounding environment.

Consumers are seeking better image quality, immersive experiences, and greater comfort when using HMDs. They expect displays with high resolution, vibrant colors, and minimal distortion to create a realistic and enjoyable viewing experience. Additionally, comfort is a crucial factor since users often wear these devices for extended periods. Consumers desire lightweight, sleek designs that are less obtrusive and more convenient to wear in various scenarios. Smaller devices also offer improved portability, making them easier to carry and use in different environments. As such, there is a growing demand for higher performing yet smaller and more compact HMDs.

A critical element in traditional near-eye display systems is the waveguide. It is a device that guides light from a system image projector to the user's eyes. Waveguides rely on total internal reflection along the major surfaces within the device to propagate light. Achieving optimal waveguide performance requires precise design and manufacturing to prevent imperfections that could degrade the user's visual experience. This process of designing and producing waveguides is both time-consuming and costly, which hampers the availability and adoption of near-eye display systems. Additionally, there are inherent limitations in miniaturizing waveguides, which in turn restricts the miniaturization of head-mounted displays (HMDs).
US2021271006 discloses a near-eye display that includes a light-guide optical element, an image projector that introduces into the LOE illumination corresponding to an image so that the illumination propagates within said LOE by internal reflection at its major external surfaces, a coupling-out arrangement that couples the illumination out of the LOE towards the eye of the observer, wherein the coupling-out arrangement may be a set of mutually-parallel, partially-reflective surfaces deployed at an oblique angle within the LOE.
US2020310024 discloses an optical system including a light-guide optical element with first and second sets of mutually-parallel, partially-reflecting surfaces at different orientations, located between parallel major external surfaces, and a third set of at least partially-reflecting surfaces, deployed at the coupling-in region, to receive image illumination injected from a projector with an optical aperture having a first in-plane width and direct the image illumination via reflection of at least part of the image illumination at the third set of at least partially-reflective facets towards the first set of partially-reflective facets with an effective optical aperture having a second width larger than the first width.

### SUMMARY OF THE INVENTION

The current disclosure presents an enhanced optical system for near-eye displays that is straightforward and convenient to build, with minimal demands placed on one of its primary components, the lens. This innovative optical system for near-eye displays has the capability to deliver performance that is comparable or even superior to traditional systems, all without the necessity of incorporating a waveguide as part of the setup.

The present disclosure introduces a novel optical system for near eye displays, which utilizes a series of parallel partial reflecting surfaces. This approach bears similarities to the Light-Guide Optical Element (LOE) described in US Patent No. 7,643,214 and US Patent No. 7,724,442. The LOE incorporates a lens that acts as a light-transmitting substrate with two parallel major surfaces. Light is guided between these surfaces, aided by an optical element that achieves total internal reflection or dielectric coatings to trap the light. Additionally, the LOE incorporates multiple partially reflecting surfaces that are non-parallel to the major surfaces, facilitating the coupling of light to the user's eye.

In contrast, the new optical system for near eye displays in the present disclosure employs a set of parallel partial reflecting surfaces but does not rely on waveguiding through internal reflection of the major surfaces. As a result, the near eye display optical system introduced here is significantly simpler to construct compared to the aforementioned LOE. It also imposes fewer strict requirements on the major surfaces of the lens.

The accompanying drawings, which are incorporated in and constitute a part of the specification, illustrate various example systems, methods, and so on, that illustrate various example embodiments of aspects of the invention. It will be appreciated that the illustrated element boundaries (e.g., boxes, groups of boxes, or other shapes) in the figures represent one example of the boundaries. One of ordinary skill in the art will appreciate that one element may be designed as multiple elements or that multiple elements may be designed as one element. An element shown as an internal component of another element may be implemented as an external component and vice versa. Furthermore, elements may not be drawn to scale.

### BRIEF DESCRIPTION OF THE DRAWINGS

Fig. 1A illustrates an exemplary implementation of a near-eye display device.
Figs. 1B and 1C are schematic illustrations of a one eye portion of a near eye display optical system.
Figs. 2A and 2B illustrate the optical path of light for the optical system of Figs 1A and 1B.
Fig. 3A illustrates a case of undesired reflections (ghost image) created inside the disclosed lens.
Fig. 3B illustrates an improved system that improves the ghost effects .
Fig. 3C illustrates a further embodiment which improves the manufacturability and the brightness of the system.
Fig. 4A illustrates an optional near eye display optical system with a main lens having a spherically curved inner major surface .
Fig. 4B illustrates an alternative compact near eye display system where the main lens is cylindrically curved at the inner major surface and the outer major surface.
Figs. 5A and 5B illustrate front and side views of a two dimensional expansion optical system.
Figs. 6A and 6B illustrate schematic and magnified views of an optical system that deflects light from an external source to the EMB with no propagation along the lens itself.

### DETAILED DESCRIPTION

Certain embodiments of the present invention provide a light projecting system and an optical system for achieving optical aperture expansion for the purpose of, for example, head-mounted displays (HMDs) or near-eye displays, commonly known as smart glasses, which may be virtual reality or augmented reality displays. Consumer demands for better and more comfortable human computer interfaces have stimulated demand for better image quality and for smaller devices.

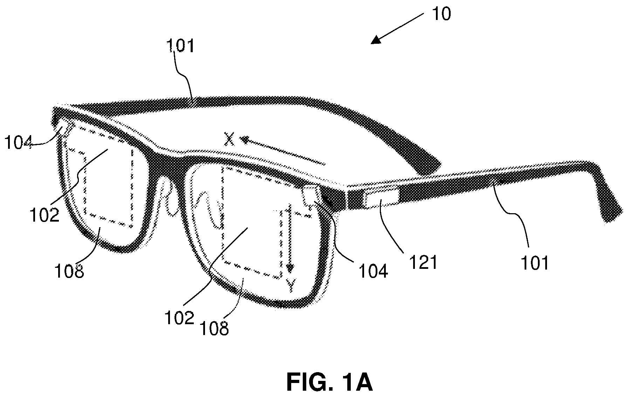

Fig. 1A illustrates an exemplary implementation of a near-eye display device 10. The near-eye display device 10 is disclosed here merely as an example and the inventive techniques disclosed herein are not limited to such devices.

In the illustrated embodiment of Fig. 1A, the near-eye display 10 employs compact image projectors or projection units 104 optically coupled so as to inject an image into optical elements 102. Optical aperture expansion of light from the projection unit 104 may be achieved within optical elements 102 by one or more arrangements for progressively redirecting the image illumination employing a set of partially reflecting surfaces (interchangeably referred to as "facets") that are parallel to each other and inclined obliquely to the direction of propagation of the image light, with each successive facet deflecting a proportion of the image light into a deflected direction. Partially reflecting facets may also work as a coupling-out arrangement that progressively couples out a proportion of the image illumination towards the eye of an observer located within a region defined as the eye-motion box (EMB).

The overall device 10 is preferably supported relative to the head of a user with each projection unit 104 and optical elements 102 serving a corresponding eye of the user. In one particularly preferred option as illustrated here, a support arrangement is implemented as a face-mounted set of lenses (e.g., Rx lenses, sunglasses, etc., referred colloquially herein as "eye glasses") with lenses 108 to which the projection unit 104 and optical element 102 are optically connected and a frame with sides 101 for supporting the device relative to ears of the user. Other forms of support arrangement may also be used, including but not limited to, head bands, visors or devices suspended from helmets.

The near-eye display 10 may include various additional components, typically including a controller 121 for actuating the projection unit 104, typically employing electrical power from a small onboard battery (not shown) or some other suitable power source. Controller 121 may include all necessary electronic components such as at least one processor or processing circuitry to drive the image projector 104.

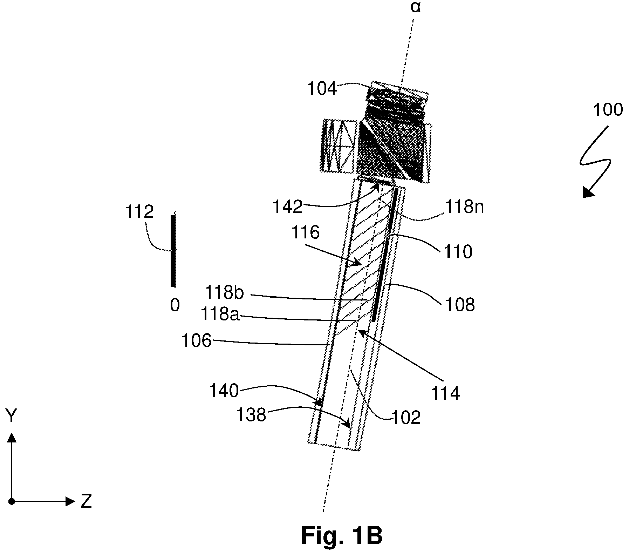

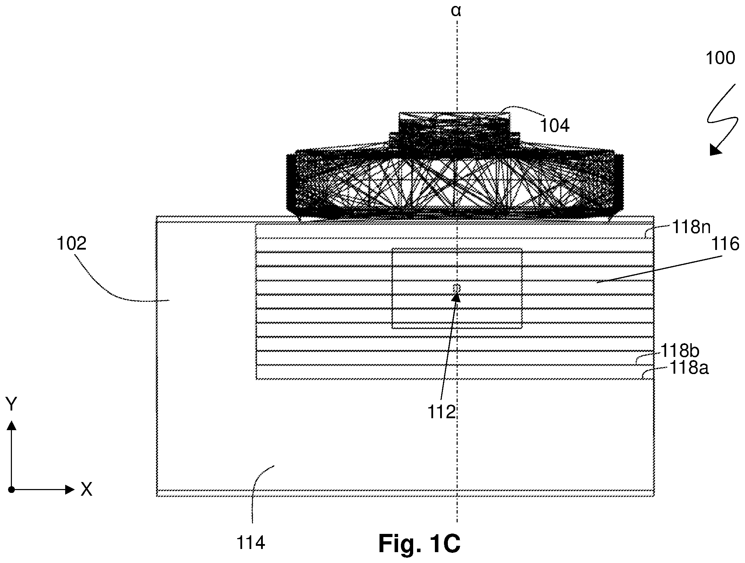

Figs. 1B and 1C are schematic illustrations of a one eye portion of a near eye display optical system 100. The system 100 is similar to the system 10 of Fig. 1A, a main exception being that, in the near eye display optical system 100, the projection unit 104 is disposed above the optical element 102 (henceforth also referred to as the lens 102) instead of to the side of the optical element 102 as shown in Fig. 1A. Fig. 1B is a side view (along YZ plane) and Fig. 1C is a front view (along the XY plane) of the near eye display optical system 100.

Lens 102 is positioned in front of the user's eye motion box (EMB) 112 to direct projected light from the projection unit 104 towards the EMB 112. The projection unit 104 may be positioned either above or below lens 102, as illustrated. Unlike a waveguide, lens 102 guides the light from the projection unit 104 to the EMB 112 without relying on total internal reflection off the major surfaces of the optical element.

Lens 102 may have two regions: a first region 114 that does not guide or reflect light and a second region 116 with multiple partially reflective internal surfaces 118, forming a Folded Beam Splitter (FBS) to expand the image apertures. Projection unit 104 projects light (micro display images) onto the second region 116 of lens 102, which reflects the light towards the center of the EMB 112 through the set of internal surfaces 118. The projected light is collimated or nearly collimated along an arrangement axis α of lens 102. The arrangement axis α is defined herein as an axis along which the internal surfaces 118 are disposed or arranged.

System 100 may also include two external lenses (first external lens 106 and second external lens 108) and a shutter 110. The first external lens 106 and second external lens 108, along with the shutter 110, may be attached to the main lens 102. They may help change the plane of focus for both the projected light and the landscape light. The inner surface of the first external lens 106 alters the focus planes of the projected and landscape images, while the inner surface of the second external lens 108 changes the focus of the landscape image. The shutter 110, positioned between the main lens 102 and the second external lens 108, may control the brightness of the landscape image. To ensure a smooth appearance, a gradually spatially varying coating may be applied to lens 102 between the first region 114 and the second region 116.

The optical shutter 110 may incorporate a polarizer that allows only P-polarized light from the landscape to pass through the lens 102 and the partially reflective surfaces 118 towards the user's eye. Coatings on the partial reflective surfaces 118 may have low reflectivity for P polarization and higher reflectivity for S polarization. The first external lens 106 may be directly attached to the main lens 102 at its major surface 140. The optical shutter 110, which can be divided into multiple independently controllable pixels, is designed to control the brightness of the landscape image using techniques like polarizers and a controllable liquid crystal cell (LCC). The shuttering may cover the entire lens 102 or be limited to overlapping the second region 116 only, affecting the brightness of the fields overlapping the projected Field of View (FOV) as shown in Fig. 1B.

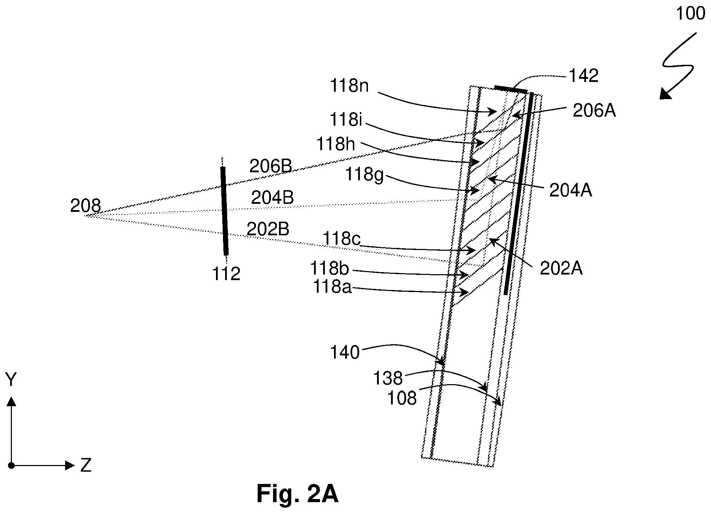

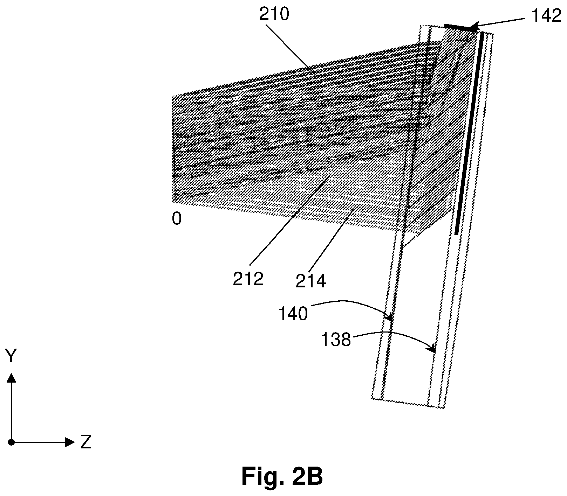

Figs. 2A and 2B illustrate the optical path of light for system 100.

Fig. 2A illustrates the ray path of 3 different rays. Seen in Fig. 2A is lens 102 of Figs. 1B-1C. Projection unit 104 is not shown, however, the coupling surface 142 between the lens 102 and projection unit 104 is illustrated. Seen in the figure are three rays, first ray 202, second ray 204, and third ray 206 coupled to lens 102 and reflected towards the fixating center 208 of the user. The fixating center 208 of the user is positioned at a pre-defined distance from the human eye, for example, about 11 mm behind the human eye 112.

In the illustration, first ray 202A propagates through multiple surfaces 118 until reaching surface 118b from which it is reflected, e.g., ray 202B reflecting towards the user's eye. As seen in the figure, ray 202A has the longest path to propagate through before it is reflected, e.g., ray 202B, towards the fixating center 208 of the user. The second ray 204A propagates through 4 surfaces 118 before reaching and being reflected, e.g., ray 204B reflecting by surface 118g towards the fixating center 208 of the user. The closest ray, third ray 206A, propagates through a single surface only, through surface 118n, before being reflected, e.g., ray 206B reflecting by surface 118i towards the fixating center 208 of the user.

In order to have the same intensity in all reflecting rays 202B, 204B and 206B, the reflectance increases as the surface is positioned further away relative to the projection unit 104. For instance, surface 118n has lower reflectance than surfaces 118a and 118b.

In accordance with some embodiments of the present invention, the spacings between the reflective surfaces 118 vary; the spaces are set in such a way to induce an even intensity distribution of all fields at EMB 112.

Fig. 2B illustrates the beam path of 3 different beams . Seen in the figure are 3 beams, first beam 210, second beam 212 and third beam 214 containing the three rays, rays 202A&B, 204A&B and 206A&B shown in Fig. 2A. Each one of first beam 210, second beam 212 and third beam 214 is almost continuous and has no or very few areas where no rays fill the aperture of a certain beam-field. Also shown in the figure is coupling surface 142 between lens 102 and the projection unit 104.

In accordance with some embodiments of the present invention, the angle of coupling surface 142 relative to the lens 102 is set so as to decrease chromatic aberrations and other keystone effects caused by propagating through a high refractive index material where the coupling in angle and the coupling out angle are not equal (wedge effect). If the surfaces of the FBS lens 102 are set at angle θ relative to the normal to the major surfaces of lens 102, then surface 142 should be rotated relative to the major surface. For instance, if θ =45°, then surface 142 may be rotated by 90° with respect to the major surface of lens 102.

In accordance with some embodiments of the present invention, in order to make the lens as compact as possible, the most extreme ray may propagate inside the lens 102 relatively parallel to the lens 102 major surfaces (about 90° to the normal to the major surfaces) so as to decrease the lens width. All other fields may propagate at larger angles, greater than 90°.

In accordance with some embodiments of the present invention, in order to minimize the width of surface 142, it should be positioned as close as possible to the external surface 138 as can be seen in Fig. 2B.

In accordance with some embodiments of the present invention, light projected from the projection unit 104 to the lens 102 may be reflected from both the major surfaces, from surface 140 of external lens 106 and from surface 138 of external lens 108. However, in a specific case where the light propagates at angles of 90° and higher, light injected via surface 142 may not hit the external surface 138 of external lens 108.

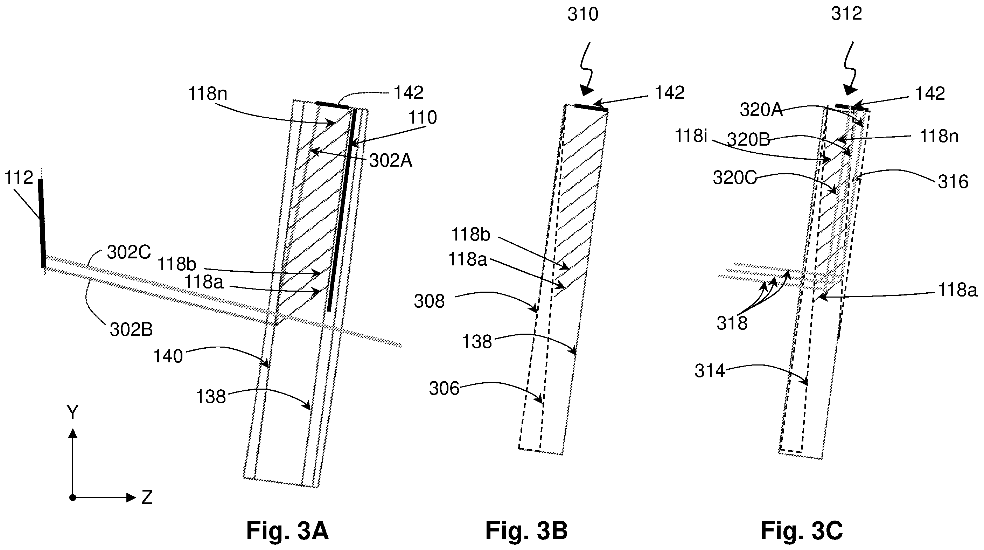

Undesired reflections (ghost images) may be created via surface 140. Therefore, to eliminate undesired reflections, the adhesive used in between lens 102 and external lens 106 may have the same RI (refractive index), and coating should not be used on surface 140 of external lens 106. In the case that such a requirement cannot be met, undesired reflections (seen in Fig. 3A) may occur.

Fig. 3A illustrates a case of undesired reflections (ghost image) created inside the disclosed lens. As seen in the figure, ray 302A is reflected at surface 140 as an undesired reflection, ray 302B. It should be noted that the undesired reflection comes from a direction outside the FOV of ray 302C, and light from the landscape may reach EMB 112 from this direction without propagating via shutter 110. Hence, the relative brightness of ray 302B relative to ray 302C, may be much lower than that of light within the FOV of the image.

Fig. 3B illustrates an improved system that improves the ghost effects . Seen in the figure is lens 310 having an active area (i.e., an area incorporating partially reflecting surfaces) that is slanted relative to the lens structure. The active area of the surfaces 118 positioned further away from the input plane, e.g., surface 142, for instance, surfaces 118a and 118b, is closer to the surface 138, while the active area of surfaces that are closer to the input plane, surface 142, for instance, surfaces 118i and 118n, is closer to the surface 308. Hence, the coated active area of the surfaces could be slanted relative to the main lens structure as shown in Fig. 3B.

Thus, only light that is very far away from the FOV fields may be reflected to the EMB 112. This may be achieved by selectively coating different areas of the different plates when making lens 102 or by adhering two parts together with surface 306 in between (however, the light hitting surface 306, will have lower angle of incidence (AOI) relative to surface 308 so the demand on matching the RI will be lower). Fig. 3B shows such an exemplary structure whereas the correcting external lenses 106 and 108 and the optical shutter 110 are not shown.

Furthermore, for the same reason of the shift of the active area of the surfaces, the surfaces may also shift their edge along the Y axis, at the side closer to the coupling in surface (+Y), they will be closer to the user's eye (-Z) and as they are positioned away from the coupling in surface (-Y), the surfaces are positioned towards the landscape side of the glasses (+Z) . Thus, the structure of lens 312 shown in Fig. 3C may be used as well.

Fig. 3C illustrates a further embodiment which improves the manufacturability and the brightness of the system. Seen in the figure is lens 312 with surfaces having their edges shifted along the Y axis, at the side closer to the +Z side. Such structure is advantageous for the following reasons:
- it is relatively easy to manufacture a structure having an array with parallel edges 314 and 316.
- system efficiency is improved where surface 118n does not reflect the light of beam 318 away from EMB 112. However, the rays of beam 318 reaching surface 118a have different intensities since the number of surfaces beam 318 propagates through till reaching surface 118a varies along the Z axis position of the ray hitting surface 118a.

This should be considered when designing coating reflectivity and the spacing in between surfaces 118. For instance, ray 320C may have lower intensity than ray 320A since unlike ray 320A, ray 320C propagates through surface 118.

In addition, special care should be taken at the edges of surfaces 118 along plane 316 in order not to scatter light and harm the images by scattering and diffraction effects, for instance, ray 320b may be scattered by the edge effects of surface 134.

By the nature of the surfaces array of the FBS lens 102, the light hitting the array and being expanded should be collimated along the axis of expansion (the vertical, Y direction in the figure).

In accordance with some embodiments of the present invention, the plane of focus may be changed by additional lens(es) positioned in between the user's eye and the FBS (for instance, lens 106 in Fig. 1B).

In accordance with some embodiments of the present invention, additional lens(es) may be used to correct the focus of the landscape image.

In accordance with some embodiments of the present invention, if spherical lenses are to be used, it may not be possible to use an optical shutter(s) since it may not be possible to adhere the shutter to the spherical surface of the lens. Therefore, shutter 110 may be situated in between lens 108 and the FBS lens 102 as shown in Figs. 1B, 2A and 3A.

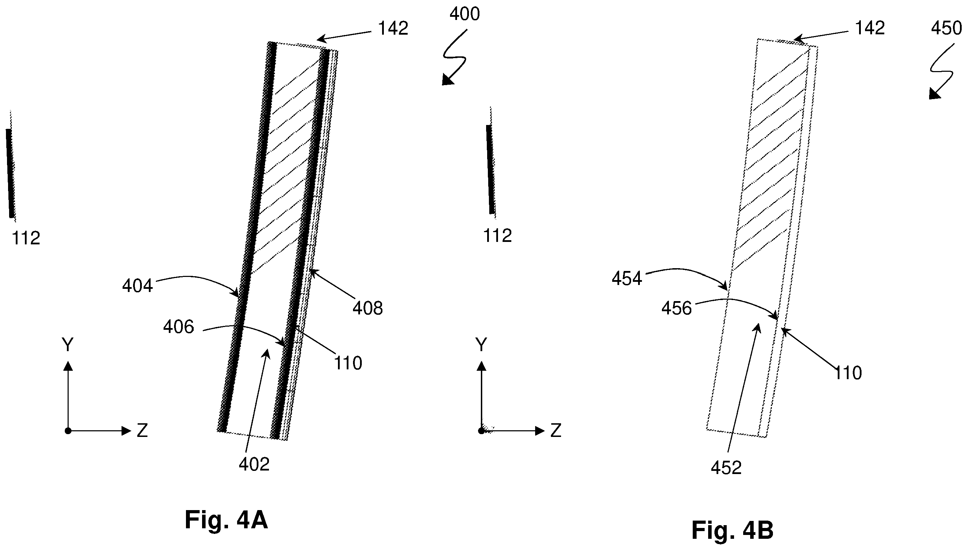

Fig. 4A illustrates an optional near eye display (NED) optical system 400 with a main lens 402 having a spherically curved inner major surface . Seen in the figure, inner major surface 404 may have optical power, while outer major surface 406 may not have optical power. Therefore, shutter 110 may be adhered to the outer major surface 406 of lens 402 and an additional external lens 408 may be adhered to the shutter 110.

Fig. 4B illustrates an alternative compact near eye display (NED) system 450 where the main lens 452 is cylindrically curved at the inner major surface 454 and the outer major surface 456. As seen in the figure, both major surfaces of lens 452, inner major surface 454 and outer major surface 456 have optical power. The shutter 110 may be adhered to the non-flat major surface 456.

However, in case of a shutter 110 that cannot adhere to a spherical surface, but can only adhere to a cylindrically curved surface, both surfaces 454 and 456 should have only a cylindrical radius of curvature.

In accordance with some embodiments of the present invention, both major inner surface 454 and major outer surface 456 may have (along the array of the FBS lens 452) vertical cylindrical power in such a way the power of the two surfaces is set in a way that they (almost) cancel one another, and thus, do not change the landscape image focus, however, the focus of the vertical focus of the image may be changed.

In accordance with some embodiments of the present invention, the light projected via projection unit 104 on lens 452 may have different planes of focus between the two axes, such that after propagating via curved surface 454, the image may have symmetrical focus, at the desired distance.

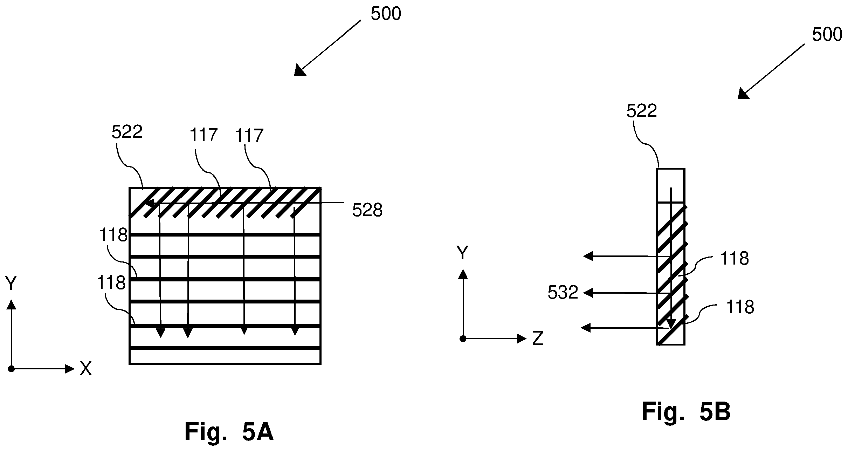

Figs. 5A and 5B illustrate a 2D expansion system 500 where the FBS lens 522 is composed of two parts: where surfaces 118 expand the image vertically and where surfaces 117 expand the light along the horizontal direction. For simplicity reasons the projection unit is not shown in the figure. As seen, ray 528 is injected first to the upper part and expanded along the horizontal direction by the surfaces 117 and then expanded along the vertical direction by the surfaces 118. The same system is shown from the side view in Fig. 5B. The rays after 2D expansion exiting the FBS lens 522 are denoted 532. For simplicity reasons only a single direction of propagation of light is shown in the figure.

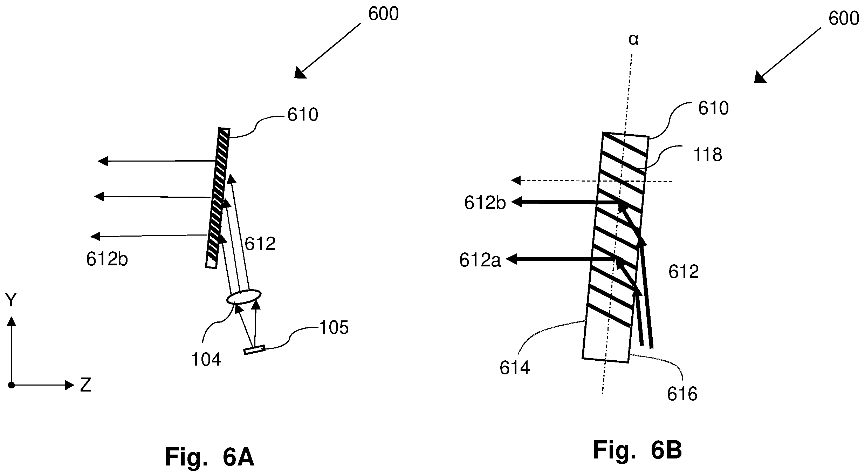

Figs. 6A and 6B illustrate an optical system using an FBS lens 610 to deflect light from outside the lens 610 from an external source to the EMB with no propagation along the lens 610 itself. Projection unit 104 and its micro display 105 project rays 612 of collimated light at acute angles relative to the arrangement axis α. The light 612 enters the lens 610 through the major surface 616. In one embodiment, the collimated light enters the major surface 616 at angles between 5° and 45° relative to the arrangement axis α. A thin film or coating with specific optical properties may be applied to the major surface 616 such that the incoming light can be directed to enter the lens 610 at shallow angles.

Some of the light 612 entering the lens 610 through the first major surface 616 may be immediately deflected off an FBS surface 118 towards the EMB as ray 612a. Some of the light 612 entering the lens 610 through the first major surface 616 may be transmitted through one or more FBS surfaces 118 and then reflected off another surface 118 towards the EMB as ray 612b. Notice that in the embodiment of Figs. 6A and 6B there is no light propagation along lens 610 (along the arrangement axis α) itself by total internal reflection off the first and second major surfaces 614 and 616.

### DEFINITIONS

The following includes definitions of selected terms employed herein. The definitions include various examples or forms of components that fall within the scope of a term and that may be used for implementation. The examples are not intended to be limiting. Both singular and plural forms of terms may be within the definitions.

An "operable connection," or a connection by which entities are "operably connected," is one in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control. For example, two entities can be operably connected by being able to communicate signals to each other directly or through one or more intermediate entities like a processor, operating system, a logic, software, or other entity. Logical or physical communication channels can be used to create an operable connection.

To the extent that the term "includes" or "including" is employed in the detailed description or the claims, it is intended to be inclusive in a manner similar to the term "comprising" as that term is interpreted when employed as a transitional word in a claim. Furthermore, to the extent that the term "or" is employed in the detailed description or claims (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995).

While example systems, methods, and so on, have been illustrated by describing examples, and while the examples have been described in considerable detail, it is not the intention of the applicants to restrict or in any way limit scope to such detail. It is, of course, not possible to describe every conceivable combination of components or methodologies for purposes of describing the systems, methods, and so on, described herein. Additional advantages and modifications will readily appear to those skilled in the art. Therefore, the invention is not limited to the specific details, the representative apparatus, and illustrative examples shown and described. Thus, this application is intended to embrace alterations, modifications, and variations that fall within the scope of the appended claims. Furthermore, the preceding description is not meant to limit the scope of the invention. Rather, the scope of the invention is to be determined by the appended claims.

## Claims

1. A near eye display optical system (100), comprising:
a lens (452) extending along an arrangement axis (a) and having (a) an input plane (142) and (b) first (454) and second (456) major surfaces generally extending along the arrangement axis (a), the lens (452) configured to receive light corresponding to an image collimated along the arrangement axis (a) via the input plane (142); and
the lens (452) comprising a set of mutually parallel, partially reflective internal surfaces (118) comprising coatings and being disposed along the arrangement axis (a) at angles relative to the arrangement axis (a),
a first partially reflective internal surface from the set (118n) disposed closest to the input plane (142) having lower reflectance than a second partially reflective internal surface (118a) farthest from the input plane (142)
**characterised in that**
at least some of the light reaches the second partially reflective internal surface (118a) after being transmitted by the first partially reflective internal surface (118n) and without previously having reflected off the first or second major surfaces (454, 456).

2. The near eye display of claim 1, wherein the second partially reflective internal surface (118a) reflects the at least some the light out of the lens (452) at a 90 degree angle towards an eye motion box (112) of a user of the near eye display.

3. The near eye display of claim 1, comprising a projection unit (104) configured to project the light corresponding to the image collimated along the arrangement axis (a) onto the lens (452) via the input plane (142).

4. The near eye display of claim 1, comprising:
a first external lens (106) adjacent the first major surface (454) and having optical power; and
a second external lens (108) adjacent the second major surface (456) and having optical power complementary to the optical power of the first external lens (106) such that landscape light transmitted through the first external lens (106) and acted upon by the optical power of the first major surface (454) is subsequently transmitted through the second external lens (108) acted upon by the optical power of the second major surface (456) to appear to a user similar to the landscape light as first received by the first external lens (106).

5. The near eye display of claim 4, wherein
at least one of the first and second external lenses (106, 108) is nonplanar, or
the first and second external lenses (106, 108) are not parallel to each other.

6. The near eye display of claim 4, comprising:
an optical shutter (110) disposed between (a) one of the first and second external lenses (106, 108) and (b) a corresponding one of the first and second major surfaces (454, 456) to overlap at least some of the partially reflective surfaces (118) along an optical axis of the near eye display, the optical shutter (110) incorporating a polarizer oriented such that only P polarized light is transmitted from the landscape light through the lens (452) and the partially reflective surfaces (118) towards and eye of the user, wherein the partially reflective surfaces comprise coatings (118) that are polarization dependent with lower P polarization reflectivity and higher S polarization reflectivity.

7. The near eye display of claim 1, comprising:
an external lens (408) adjacent the second major surface (456) and having optical power configured to reflect light towards a fixating center (208) of a user of the near eye display, the fixating center (208) of the user positioned at a pre-defined distance from the user's eye.

8. The near eye display of claim 1, wherein the first partially reflective internal surface (118n) and the second partially reflective internal surface (118a) are configured to reflect light towards a fixating center (208) of a user of the near eye display, the fixating center (208) of the user positioned at a pre-defined distance from the user's eye.

9. The near eye display of claim 1, wherein at least one of the first and second major surfaces (454, 456) is nonplanar or the first and second major surfaces (454, 456) are not parallel.

10. The near eye display of claim 1, wherein the set of partially reflective internal surfaces (118) is configured to reflect the light out of the lens (452) towards an eye motion box (112) of a user of the near eye display, wherein spacings between partially reflective surfaces in the set (118) vary, the spacings being set such as to induce an even intensity distribution of all light fields at the eye motion box (112).

11. The near eye display of claim 1, wherein a partially reflecting area of the second partially reflecting internal surface is closer to the first major surface while a partially reflecting area of the first partially reflecting internal surface is closer to the second major surface such that the respective partially reflecting areas of the first and second partially reflecting surfaces are slanted relative to the arrangement axis (a).

12. A near eye display comprising multiple lenses according to claim 1, a first lens of the multiple lenses configured to expand the light in a first direction and a second lens of the multiple lenses configured to, thereafter, expand the light in a second direction perpendicular to the first direction.

## Patentansprüche

1. Optisches System für eine augennahe Anzeige (100), das Folgendes umfasst:
eine Linse (452), die sich entlang einer Anordnungsachse (a) erstreckt und (a) eine Eingangsebene (142) und (b) eine erste (454) und eine zweite (456) Hauptfläche, die sich allgemein entlang der Anordnungsachse (a) erstrecken, aufweist,
wobei die Linse (452) dazu konfiguriert ist, Licht, das einem entlang der Anordnungsachse (a) kollimierten Bild entspricht, über die Eingangsebene (142) zu empfangen; und
wobei die Linse (452) einen Satz von zueinander parallelen, teilreflektierenden inneren Flächen (118), die Beschichtungen umfassen und entlang der Anordnungsachse (a) unter Winkeln relativ zu der Anordnungsachse (a) angeordnet sind, umfasst,
wobei eine erste teilreflektierende innere Fläche aus dem Satz (118n), die der Eingangsebene (142) am nächsten angeordnet ist, einen geringeren Reflexionsgrad als eine zweite teilreflektierende innere Fläche (118a), die am weitesten von der Eingangsebene (142) entfernt ist, aufweist,
**dadurch gekennzeichnet,**
**dass** zumindest ein Teil des Lichts die zweite teilreflektierende innere Fläche (118a) nach Transmission durch die erste teilreflektierende innere Fläche (118n) und ohne vorherige Reflexion an der ersten oder der zweiten Hauptfläche (454, 456) erreicht.

2. Augennahe Anzeige nach Anspruch 1, wobei die zweite teilreflektierende innere Fläche (118a) den zumindest einen Teil des Lichts unter einem Winkel von 90 Grad aus der Linse (452) heraus in Richtung eines Augenbewegungsbereichs (112) eines Benutzers der augennahen Anzeige reflektiert.

3. Augennahe Anzeige nach Anspruch 1, umfassend eine Projektionseinheit (104), die dazu konfiguriert ist, das Licht, das dem entlang der Anordnungsachse (a) kollimierten Bild entspricht, auf die Linse (452) über die Eingangsebene (142) zu projizieren.

4. Augennahe Anzeige nach Anspruch 1, umfassend:
eine erste externe Linse (106), die der ersten Hauptfläche (454) benachbart ist und Brechkraft aufweist; und
eine zweite externe Linse (108), die der zweiten Hauptfläche (456) benachbart ist und zu der Brechkraft der ersten externen Linse (106) komplementäre Brechkraft aufweist, sodass Umgebungslicht, das durch die erste externe Linse (106) hindurch transmittiert wird und durch die Brechkraft der ersten Hauptfläche (454) beeinflusst wird, anschließend durch die zweite externe Linse (108) hindurch, beeinflusst durch die Brechkraft der zweiten Hauptfläche (456), transmittiert wird, um einem Benutzer ähnlich dem zuerst von der ersten externen Linse (106) empfangenen Umgebungslicht zu erscheinen.

5. Augennahe Anzeige nach Anspruch 4, wobei
mindestens eine von der ersten und der zweiten externen Linse (106, 108) nicht eben ist oder die erste und die zweite externe Linse (106, 108) nicht parallel zueinander sind.

6. Augennahe Anzeige nach Anspruch 4, umfassend:
einen optischen Verschluss (110), der derart zwischen (a) einer von der ersten und der zweiten externen Linse (106, 108) und (b) einer entsprechenden von der ersten und der zweiten Hauptfläche (454, 456) angeordnet ist, dass er zumindest einige der teilreflektierenden Flächen (118) entlang einer optischen Achse der augennahen Anzeige überlappt, wobei der optische Verschluss (110) einen derart ausgerichteten Polarisator beinhaltet, dass nur P-polarisiertes Licht aus dem Umgebungslicht durch die Linse (452) und die teilreflektierenden Flächen (118) hindurch in Richtung eines Auges des Benutzers transmittiert wird, wobei die teilreflektierenden Flächen Beschichtungen (118), die mit geringerem Reflexionsvermögen für P-Polarisation und höherem Reflexionsvermögen für S-Polarisation polarisationsabhängig sind, umfassen.

7. Augennahe Anzeige nach Anspruch 1, umfassend:
eine externe Linse (408), die der zweiten Hauptfläche (456) benachbart ist und Brechkraft aufweist, dazu konfiguriert, Licht in Richtung eines Fixationszentrums (208) eines Benutzers der augennahen Anzeige zu reflektieren, wobei das Fixationszentrum (208) des Benutzers in einem vordefinierten Abstand von dem Auge des Benutzers positioniert ist.

8. Augennahe Anzeige nach Anspruch 1, wobei die erste teilreflektierende innere Fläche (118n) und die zweite teilreflektierende innere Fläche (118a) dazu konfiguriert sind, Licht in Richtung eines Fixationszentrums (208) eines Benutzers der augennahen Anzeige zu reflektieren, wobei das Fixationszentrum (208) des Benutzers in einem vordefinierten Abstand von dem Auge des Benutzers positioniert ist.

9. Augennahe Anzeige nach Anspruch 1, wobei mindestens eine von der ersten und der zweiten Hauptfläche (454, 456) nicht eben ist oder die erste und die zweite Hauptfläche (454, 456) nicht parallel sind.

10. Augennahe Anzeige nach Anspruch 1, wobei der Satz von teilreflektierenden inneren Flächen (118) dazu konfiguriert ist, das Licht aus der Linse (452) heraus in Richtung eines Augenbewegungsbereichs (112) eines Benutzers der augennahen Anzeige zu reflektieren, wobei Abstände zwischen teilreflektierenden Flächen in dem Satz (118) variieren, wobei die Abstände derart festgelegt sind, dass die Abstände eine gleichmäßige Intensitätsverteilung aller Lichtfelder an dem Augenbewegungsbereich (112) herbeiführen.

11. Augennahe Anzeige nach Anspruch 1, wobei ein teilweise reflektierender Bereich der zweiten teilweise reflektierenden inneren Fläche näher an der ersten Hauptfläche ist, während ein teilweise reflektierender Bereich der ersten teilweise reflektierenden inneren Fläche näher an der zweiten Hauptfläche ist, sodass die jeweiligen teilweise reflektierenden Bereiche der ersten und der zweiten teilweise reflektierenden Fläche relativ zu der Anordnungsachse (a) geneigt sind.

12. Augennahe Anzeige, umfassend mehrere Linsen nach Anspruch 1, wobei eine erste Linse der mehreren Linsen dazu konfiguriert ist, das Licht in einer ersten Richtung aufzuweiten, und eine zweite Linse der mehreren Linsen dazu konfiguriert ist, das Licht danach in einer zweiten Richtung senkrecht zu der ersten Richtung aufzuweiten.

## Revendications

1. Système optique d'afficheur proche de l'œil (100), comprenant :
une lentille (452) s'étendant le long d'un axe d'agencement (a) et présentant (a) un plan d'entrée (142) et (b) une première (454) et une deuxième (456) surface principales s'étendant globalement le long de l'axe d'agencement (a),
la lentille (452) configurée pour recevoir de la lumière correspondant à une image collimatée le long de l'axe d'agencement (a) par l'intermédiaire du plan d'entrée (142) ; et
la lentille (452) comprenant un ensemble de surfaces internes partiellement réfléchissantes parallèles entre elles (118) qui comprennent des revêtements et sont disposées le long de l'axe d'agencement (a) selon des angles par rapport à l'axe d'agencement (a),
une première surface interne partiellement réfléchissante de l'ensemble (118n) disposée le plus près du plan d'entrée (142) présentant une réflectance inférieure à celle d'une deuxième surface interne partiellement réfléchissante (118a) la plus éloignée du plan d'entrée (142),
**caractérisé**
**en ce qu'**au moins une partie de la lumière atteint la deuxième surface interne partiellement réfléchissante (118a) après avoir été transmise par la première surface interne partiellement réfléchissante (118n) et sans s'être préalablement réfléchie sur la première ou la deuxième surface principale (454, 456).

2. Afficheur proche de l'œil selon la revendication 1, dans lequel la deuxième surface interne partiellement réfléchissante (118a) réfléchit l'au moins une partie de la lumière hors de la lentille (452) selon un angle de 90 degrés vers une zone de mouvement de l'œil (112) d'un utilisateur de l'afficheur proche de l'œil.

3. Afficheur proche de l'œil selon la revendication 1, comprenant une unité de projection (104) configurée pour projeter la lumière correspondant à l'image collimatée le long de l'axe d'agencement (a) sur la lentille (452) par l'intermédiaire du plan d'entrée (142).

4. Afficheur proche de l'œil selon la revendication 1, comprenant :
une première lentille externe (106) adjacente à la première surface principale (454) et présentant une puissance optique ; et
une deuxième lentille externe (108) adjacente à la deuxième surface principale (456) et présentant une puissance optique complémentaire de la puissance optique de la première lentille externe (106) de sorte que de la lumière de paysage transmise à travers la première lentille externe (106) et soumise à l'action de la puissance optique de la première surface principale (454) est ensuite transmise à travers la deuxième lentille externe (108) soumise à l'action de la puissance optique de la deuxième surface principale (456) de manière à apparaître à un utilisateur semblable à la lumière de paysage telle que reçue initialement par la première lentille externe (106).

5. Afficheur proche de l'œil selon la revendication 4, dans lequel
au moins l'une parmi la première et la deuxième lentille externe (106, 108) est non plane, ou
la première et la deuxième lentille externe (106, 108) ne sont pas parallèles l'une à l'autre.

6. Afficheur proche de l'œil selon la revendication 4, comprenant :
un obturateur optique (110) disposé entre (a) l'une parmi la première et la deuxième lentille externe (106, 108) et (b) une surface correspondante parmi la première et la deuxième surface principale (454, 456) de manière à chevaucher au moins certaines des surfaces partiellement réfléchissantes (118) le long d'un axe optique de l'afficheur proche de l'œil, l'obturateur optique (110) incorporant un polariseur orienté de sorte que seule la lumière polarisée P est transmise à partir de la lumière de paysage à travers la lentille (452) et les surfaces partiellement réfléchissantes (118) vers un œil de l'utilisateur, dans lequel les surfaces partiellement réfléchissantes comprennent des revêtements (118) qui sont dépendants de la polarisation avec une réflectivité plus faible pour la polarisation P et une réflectivité plus élevée pour la polarisation S.

7. Afficheur proche de l'œil selon la revendication 1, comprenant :
une lentille externe (408) adjacente à la deuxième surface principale (456) et présentant une puissance optique configurée pour réfléchir de la lumière vers un centre de fixation (208) d'un utilisateur de l'afficheur proche de l'œil, le centre de fixation (208) de l'utilisateur positionné à une distance prédéfinie de l'œil de l'utilisateur.

8. Afficheur proche de l'œil selon la revendication 1, dans lequel la première surface interne partiellement réfléchissante (118n) et la deuxième surface interne partiellement réfléchissante (118a) sont configurées pour réfléchir de la lumière vers un centre de fixation (208) d'un utilisateur de l'afficheur proche de l'œil, le centre de fixation (208) de l'utilisateur positionné à une distance prédéfinie de l'œil de l'utilisateur.

9. Afficheur proche de l'œil selon la revendication 1, dans lequel au moins l'une parmi la première et la deuxième surface principale (454, 456) est non plane ou la première et la deuxième surface principale (454, 456) ne sont pas parallèles.

10. Afficheur proche de l'œil selon la revendication 1, dans lequel l'ensemble de surfaces internes partiellement réfléchissantes (118) est configuré pour réfléchir la lumière hors de la lentille (452) vers une zone de mouvement de l'œil (112) d'un utilisateur de l'afficheur proche de l'œil, dans lequel des espacements entre des surfaces partiellement réfléchissantes de l'ensemble (118) varient, les espacements étant déterminés de manière à induire une répartition uniforme d'intensité de tous les champs lumineux au niveau de la zone de mouvement de l'œil (112).

11. Afficheur proche de l'œil selon la revendication 1, dans lequel une zone à réflexion partielle de la deuxième surface interne à réflexion partielle est plus proche de la première surface principale tandis qu'une zone à réflexion partielle de la première surface interne à réflexion partielle est plus proche de la deuxième surface principale de sorte que les zones à réflexion partielle respectives de la première et de la deuxième surface à réflexion partielle sont inclinées par rapport à l'axe d'agencement (a).

12. Afficheur proche de l'œil comprenant une pluralité de lentilles selon la revendication 1, une première lentille de la pluralité de lentilles configurée pour étendre la lumière dans une première direction et une deuxième lentille de la pluralité de lentilles configurée pour, ensuite, étendre la lumière dans une deuxième direction perpendiculaire à la première direction.
